# EUROPÄISCHE PATENTSCHRIFT

(11) **EP 3 237 094 B1**
(45) Veröffentlichungstag und Bekanntmachung des Hinweises auf die Patenterteilung: **07.07.2021**
(21) Anmeldenummer: 15774503.5
(22) Anmeldetag: 02.09.2015
(51) Int. Cl.: B01D 53/04, B01D 53/26, B60T 17/00

(54) **VORRICHTUNG ZUM DÄMPFEN EINES SCHALLS EINES ABGASES, SYSTEM UMFASSEND EINE DERARTIGE VORRICHTUNG, SORPTIONSTROCKNER MIT EINER DERARTIGEN VORRICHTUNG SOWIE VERFAHREN ZUM DÄMPFEN EINES SCHALLS EINES ABGASES**
DEVICE FOR ATTENUATING AN EXHAUST-GAS NOISE, SYSTEM COMPRISING A DEVICE OF SAID TYPE, SORPTION DRYER HAVING A DEVICE OF SAID TYPE, AND METHOD FOR ATTENUATING AN EXHAUST-GAS NOISE
DISPOSITIF PERMETTANT D'ATTÉNUER LE BRUIT D'UN GAZ D'ÉCHAPPEMENT, SYSTÈME COMPRENANT LEDIT DISPOSITIF, DESSICCATEUR À SORPTION MUNI DUDIT DISPOSITIF ET PROCÉDÉ PERMETTANT D'ATTÉNUER LE BRUIT D'UN GAZ D'ÉCHAPPEMENT

(30) Priorität: 22.12.2014 DE 102014018932
(43) Veröffentlichungstag der Anmeldung: 01.11.2017
(73) Patentinhaber: Donaldson Filtration Deutschland GmbH, 42781 Haan (DE)
(72) Erfinder: WALDSCHMIDT-SCHROER, Sylke, 40699 Erkrath (DE); AMTMANN, Till, 42697 Solingen (DE)
(74) Vertreter: König Szynka Tilmann von Renesse Patentanwälte Partnerschaft mbB
(86) Internationale Anmeldenummer: PCT/EP2015/001767
(87) Internationale Veröffentlichungsnummer: WO 2016/102033

(56) Entgegenhaltungen:
- CH-A- 379 836
- US-A- 3 147 097
- US-A- 3 154 388
- US-A- 5 112 372
- US-A1- 2004 261 621
- US-A1- 2011 297 478
- US-B1- 8 418 805
- DATABASE WPI Week 198327 Thomson Scientific, London, GB; AN 1983-704716 -& SU 954 579 A1 (MOSCOW BAUMAN TECH COLL) 30 August 1982 (1982-08-30)

## Beschreibung

Die Erfindung betrifft eine Vorrichtung zum Dämpfen eines Schalls eines Abgases, ein System umfassend eine derartige Vorrichtung, einen Sorptionstrockner mit einer derartigen Vorrichtung sowie ein Verfahren zum Dämpfen eines Schalls eines Abgases.

Druckbeaufschlagte Fluide, insbesondere Gase, ganz bevorzugt Druckluft, werden beispielsweise als Antriebs- und Prozessenergie in allen Bereichen der industriellen und handwerklichen Fertigung benötigt. Insbesondere Druckluft muss trocken, ölfrei und sauber sein, um kostspielige Produktionsausfälle zu vermeiden. In der Regel wird Druckluft durch das Verdichten von Luft erzeugt, d.h. ein Kompressor saugt Umgebungsluft an. Die Umgebungsluft kann Schadstoffe, Schmutzpartikel und auch Feuchtigkeit in Form von Wasserdampf enthalten. Der Wasserdampf kann in der Druckluft unkontrolliert kondensieren und zu betrieblichen Störungen und somit zu erheblichen Kosten führen. Um die betrieblichen Störungen zu vermeiden, wird meist ein mit Druck beaufschlagtes Fluid einer Vorrichtung zur Aufbereitung zugeführt, um auch den Anforderungen der unterschiedlichen Bereiche der Anwendung, beispielsweise Reinraumerfordernisse der Lebensmittel- oder Halbleiterindustrie, zu genügen.

Vorrichtungen zur Trocknung und Filterung eines Gases sind in verschiedenen Bauformen bekannt. In einer bevorzugten Ausführungsform sind derartige Vorrichtungen als Sorptionstrockner ausgebildet.

Sorptionstrockner dienen im Allgemeinen dazu, Feuchtigkeit aus einem Gas und insbesondere einem komprimierten Gas, wie z.B. Druckluft, zu entfernen. Bei der Erzeugung von Druckluft saugt ein Kompressor Umgebungsluft an und verdichtet diese. Während des Verdichtungsprozesses werden alle Bestandteile der angesaugten Luft entsprechend dem Betriebsüberdruck konzentriert bei gleichzeitiger Temperaturerhöhung. Die Aufnahmekapazität der Druckluft für Feuchtigkeit bleibt jedoch annähernd konstant. Die nachfolgende Abkühlung führt daher zur Sättigung der Druckluft mit Feuchte, jede weitere Abkühlung zur Kondensation der überschüssigen Feuchte. Es entsteht Wasser, welches in der Druckluft im gesamten nachfolgenden Druckluftsystem Rost und Korrosion verursachen kann. Es kann auch zu Vereisungen führen. Rost, Korrosion und Vereisungen führen zu hohen Folgekosten bei der Wartung, zu Qualitätseinbußen, insbesondere bei Anwendungen, die hohe Anforderung an die Reinheit der Druckluft stellen, wie beispielsweise Anwendungen in der Lebensmittelindustrie, der Pharmaindustrie oder in der Halbleitertechnik, und zum frühzeitigen Ausfall von einzelnen Komponenten bis hin zum kompletten Produktionsausfall. Wasser und Feuchtigkeit müssen daher aus dem Druckluftsystem entfernt werden.

Bekannte Sorptionstrockner weisen in der Regel mindestens zwei Behälter als Teilabschnitte einer Rohrleitung des Sorptionstrockners auf, in denen mindestens eine Kartusche mit einem Trockenmittel (Sorbens) - häufig in Form einer Schüttung des granulatförmigen Trockenmittels - angeordnet ist. Häufig kommen adsorptive Trockenmittel zum Einsatz, wobei auch absorptive Trockenmittel verwendet werden können. Die beiden Behälter als Teilabschnitte der Rohrleitung sind durch Leitungen parallel miteinander und jeweils mit dem Einlass des zu trocknenden Gases und dem Auslass des getrockneten Gases verbunden. Der Strömungsweg des Gases wird über Ventile gesteuert. Die Steuerung der Ventile übernimmt eine Steuereinheit. Die Steuerung der Ventile ist dabei so ausgelegt, dass stets ein Behälter von dem zu trocknenden Gas durchströmt wird. In diesem wird das Gas getrocknet, indem die darin enthaltene Feuchtigkeit von dem in dem Behälter enthaltenen Trockenmittel gebunden wird. In dieser Phase befindet sich dieser Behälter somit in einer Sorptions- oder Trockenphase. Während der Sorptionsphase des einen Behälters wird der andere Behälter (in der Regel) in entgegengesetzter Richtung von einem Teil des getrockneten Gases durchströmt, um das während einer vorherigen Sorptionsphase gesättigte Sorbens zu trocknen, d.h. zu regenerieren. Dieser Behälter befindet sich dabei folglich in der Regenerationsphase. Wenn das Sorbens ohne externe Zufuhr von Wärmeenergie, d.h. lediglich durch einen Teilstrom des vorab getrockneten Gases getrocknet wird, handelt es sich um eine so genannte kalte Regeneration. Zudem ist die warme Regeneration eines Sorptionstrockners bekannt. Hierbei wird der sich in der Regenerationsphase befindliche Sorptionsbehälter durch Luft regeneriert, die durch Zufuhr externer Energie aufgeheizt wurde. Bei der Luft kann es sich entweder um einen Teilstrom der getrockneten Druckluft handeln oder es kann z.B. auch Umgebungsluft verwendet werden.

Zum Aufheizen der Regenerationsluft im Zusammenhang mit der warmen Regeneration werden regelmäßig elektrische Heizvorrichtungen eingesetzt.

Nach einer vorgegebenen, von der Belastung des Sorptionstrockners abhängigen Zeitspanne der Regeneration, ist es erforderlich, die Ventile in den Zu- und Ableitungen so umzusteuern, dass derjenige Behälter, der sich bislang in der Sorptionsphase befand, regeneriert wird und der Behälter, der vorher regeneriert wurde, nunmehr zur Trocknung des Gases verwendet wird.

Üblicherweise wird der dem Behälter zugeführte Teilstrom während der Regenerationsphase in die Umgebung mittels eines Schalldämpfers abgeführt. Für eine hohe Effizienz beim Regenieren und/oder Entfeuchten ist ein durch den Schalldämpfer bedingter Strömungswiderstand möglichst gering zu wählen. Andererseits muss der Schalldämpfer auch den beim Druckschlag beim Umsteuern der Zu- und Ableitungen auftretenden Schall dämpfen.

DE 601 14 894 T2 offenbart einen Abgas-Schalldämpfer mit inneren und äußeren Rohren für Drucklufthandwerkzeug. Der Schalldämpfer umfasst ein Innenrohr und ein Außenrohr, wobei das Innenrohr ein oberes offenes Ende aufweist, um die Abluft vom Abluftkanal aufzunehmen. Das Innenrohr weist ferner mindestens eine andere Öffnung auf, die der Abluft ermöglicht, aus dem Innenrohr zu strömen. Das Außenrohr umfasst auch mindestens eine Luftstromöffnung. Abhängig von der Druckanordnung kann die Größe der Öffnungen in den Rohren verwendet werden, um das Regulieren des Volumens und der Geschwindigkeit des Ausstoßens der Abluft zu unterstützen. Das Außenrohr ist in der Größe festgelegt, um einen Durchgang zwischen ihm selbst und der Wandflächen eines Hauptbereichs zu schaffen. Während der Anwendung strömt Abluft in das proximale Innenrohrende, strömt aus dem Innenrohr mindestens einer Öffnung aus, strömt aus dem Außenrohr an mindestens einer Luftströmöffnung aus, geht durch den Durchgang zwischen dem Innenrohr und den Wandflächen des Hauptbereiches hindurch, und strömt aus der Austrittsöffnung aus. Der gewundene Weg verlangsamt die Ablauft und unterstützt das Dämpfen des Abluftlärms.

Gattungsgemäße Vorrichtungen zum Dämpfen eines Schalls eines Abgases sind aus US 3 154 388 A, US 3 147 097 A, CH 379 836 A und SU 954 579 A bekannt.

Der Erfindung lag die Aufgabe zugrunde, eine einfach aufgebaute Vorrichtung zum Dämpfen eines Schalls eines Abgases zu schaffen, mit der größere Mengen an Druckluft umgesetzt werden können, einen nicht zu hohen Differenzdruck zu erzeugen sowie leise das Abgas abzuführen. Ferner lag der Erfindung die Aufgabe zugrunde, ein an unterschiedliche Anforderungen anpassbares System mit einer Vorrichtung zum Dämpfen eines Schalls eines Abgases zu schaffen mit dem zumindest ein nicht zu hoher Differenzdruck und/oder eine höhere Effizienz möglich ist. Ferner sollte ein Sorptionstrockner mit einer Vorrichtung und ein Verfahren zum Dämpfen eines Schalls eines Abgases geschaffen werden.

Diese Aufgabe wird durch die Gegenstände der nebengeordneten Ansprüche gelöst.

Kerngedanke der Erfindung ist es, sowohl eine hohe Effizienz des Trockners im Hinblick auf den Aufbau eines möglichst geringen Differenzdrucks, als auch den beim Umschalten zwischen Regeneration und Entfeuchtung auftretenden Druckschlag zu berücksichtigen, um insbesondere die hohen Frequenzen zu dämpfen. Gemäß dem Kerngedanken der Erfindung wird der Luftstrom beim Druckschlag, d.h. dem hohen Beaufschlagen des Gases mit Druck, derart aufgeteilt, dass das mit Druck beaufschlagte Gas in eine Hohlkammer eintritt, die am zum Einlass beabstandeten Ende geschlossen ausgebildet ist, um einen Reflexionsschalldämpfungsabschnitt auszubilden. Zwischen dem Einlass und dem geschlossenen Ende ist ein Durchlass zu einem Absorberabschnitt ausgebildet. Beim Durchlaufen des Hohlraums und der Reflexion und/oder Umlenkung auf das neu einströmende Abgas in die Hohlkammer kommt es zu einer Mittelung der Schalldruckamplitude, welches eine Reduzierung der Schalldruckspitzen zur Folge hat. Durch Reflexion werden die tiefen Frequenzen gedämpft. Durch den Durchlass kann der Schall von der Hohlkammer zu einem Absorberabschnitt gelangen, in dem die Schallenergie teilweise absorbiert wird, d.h., in Wärme umgewandelt wird. Durch Absorption werden in der Vorrichtung hauptsächlich die oberen Frequenzen gedämpft. Bei einer geringeren Beaufschlagung des Abgases mit Druck kann das Abgas sofort an der Stelle des Durchlasses aufgeteilt werden und sowohl in der Hohlkammer reflektiert werden als auch direkt in den Absorberabschnitt eintreten.

In einer bevorzugten Ausführungsform weist der Durchlass eine geringere Querschnittsfläche auf als die Hohlkammer. Die Ausgestaltung der geringeren Querschnittsfläche des Durchlasses im Vergleich zur Querschnittsfläche der Hohlkammer begünstigt, dass bei hohen Drücken zunächst eine Reflexion in der Hohlkammer stattfindet und das mit hohem Druck beaufschlagte Abgas auf sich selbst umgelenkt wird, um dann durch den Durchlass in den Absorberabschnitt einzutreten und in die Umgebung auszutreten. Es sind aber auch Ausführungsformen denkbar, bei denen der Durchlass eine etwas größere Querschnittsfläche hat als die Hohlkammer, beispielsweise das 1,4-fache oder 1,6-fache oder 2-fache der Querschnittsfläche der Hohlkammer. Sind gemäß einer bevorzugten Ausführungsform mehrere Durchlässe vorgesehen, so ist es bevorzugt, wenn die Summe der Querschnittsflächen der Durchlässe weniger ist als das 2-fache der Querschnittsfläche der Hohlkammer, insbesondere bevorzugt weniger als das 1,6-fache, besonders bevorzugt weniger als das 1,4-fache und ganz besonders bevorzugt geringer ist als die Querschnittsfläche der Hohlkammer.

Ein "Abgas" im Sinne der Erfindung umfasst jedwedes Gas, insbesondere Druckluft.

Der Begriff "Hohlkammer" im Sinne der Erfindung beschreibt eine hinsichtlich ihrer Geometrie zunächst nicht festgelegte, längliche Kammer, die insbesondere keine Füllung, ganz besonders bevorzugt keine Faserfüllung aufweist. Die Hohlkammer kann insbesondere rohrförmig ausgebildet sein, wobei der Querschnitt der Hohlkammer rund oder polygonförmig ausgebildet sein kann. Der Querschnitt der Hohlkammer kann ellipsenförmig oder kreisförmig sein. Es sind auch Querschnitte der Hohlkammer möglich, die die Form eines mehreckigen Polygons aufweisen.

Die Hohlkammer kann aus mehreren Teilen zusammengesetzt sein. Beispielsweise ist es denkbar, für die Hohlkammer ein Rohr zu verwenden, in dessen Umfangsfläche der Durchlass eingebracht wird und an dessen einem Ende die für den Einlass notwendigen Elemente, ggf. durch separate, mit dem Rohr verbundene Elemente ausgeführt werden und das an seinem zum Einlass beabstandeten Ende geschlossen ausgebildet ist, beispielsweise durch ein dort vorgesehenes Verschlusselement. Es ist auch denkbar, für die Hohlkammer zwei Rohre zu verwenden, die in Flucht zu einander angeordnet werden. An dem einen Ende des ersten Rohres werden die für den Einlass notwendigen Elemente, ggf. durch separate, mit dem Rohr verbundene Elemente ausgeführt. An dem dem Einlass am meisten beabstandeten Ende wird das zweite Rohr geschlossen ausgebildet, beispielsweise durch ein dort vorgesehenes Verschlusselement. Das erste Rohr und das zweite Rohr werden an ihren verbleibenden Enden über ein Verbindungsstück verbunden. Dieses Verbindungsstück kann ein rohrförmiges Verbindungsstück sein, in das der Durchlass eingebracht wird. Dies kann die Herstellung der Hohlkammer vereinfachen, da die für das Erzeugen des Durchlasses maßgeblichen Herstellungsschritte separat an dem Verbindungsstück durchgeführt werden können und die Rohre diesbezüglich unbearbeitet gelassen werden können. Ebenso ist es denkbar, die einander zugewandten ringförmigen Endoberflächen der Rohre als Begrenzungsflächen für den Durchlass zu verwenden. Werden die Rohre durch ein innenliegendes Verbindungsstück verbunden, so kann durch die einander zugewandten ringförmigen Endoberflächen der Rohre ein Durchlass in Form eines umlaufenden Spalts gebildet werden. Es ist aber auch denkbar, dass ein die beiden Rohre verbindendes Verbindungsstück Vorsprünge aufweist, die zwischen die einander zugewandten ringförmigen Endoberflächen der Rohre ragen und dadurch den ursprünglich umlaufenden Spalt in Kreissegmente unterteilt. Der Einsatz dieser Vorsprünge bietet zudem den Vorteil, dass die relative Position der verbleibenden Enden der Rohre zueinander klar festgelegt werden kann.

Der Durchlass kann jedwede Form aufweisen, insbesondere kann der Durchlass eine runde Querschnittsfläche, die kreisförmig oder ellipsenförmig sein kann, aufweisen. Polygonförmige Querschnittsflächen des Durchlasses sind ebenfalls möglich. Ebenso kann der Durchlass die Form eines Schlitzes haben.

Der Begriff "Absorberabschnitt" umfasst im Sinne der Erfindung einen Abschnitt, in dem die Schallwelle zumindest teilweise absorbiert wird, d.h., in Wärme umgewandelt wird. Die Umwandlung bzw. der Effekt der Schallabsorption kann durch Mehrfachreflexion verstärkt sein.

Vorzugsweise umgibt der Absorberabschnitt die Hohlkammer zumindest teilweise, wodurch der Mantel der Hohlkammer, d.h. die äußere Oberfläche der Hohlkammer mit entsprechendem Absorbermaterial gedämpft werden kann. Damit kann die Dämpfung der Schallwelle, die durch den Durchlass tritt, gedämpft werden, aber auch der Körperschall an der Hohlkammer. Die Außenwandung der Hohlkammer kann als Innenwandung des Absorberabschnitts ausgebildet sein. Hohlkammer und Absorberabschnitt können konzentrisch zueinander ausgestaltet sein.

In einer bevorzugten Ausführungsform weist der Absorberabschnitt ein poröses Material auf, das Steinwolle, Glaswolle, Glasfaser oder insbesondere ein offenporiger Melaminharzschaum sein kann. Hierdurch kann ein einfach verwendbares Material mit guten Eigenschaften im Hinblick auf die Verarbeitung verwendet werden. Das Material im Absorberabschnitt kann entsprechend ausgewählt sein, um eine hohe Schallabsorptionskapazität aufzuweisen, gute thermische Isolationseigenschaften, einen hohen Flammwiderstand, Hitzewiderstand und/oder geringes Gewicht, aufweisen. Als bevorzugtes Material kann *BASOTECT*® der *BASF SE* verwendet werden.

Der Durchlass ist in einem Bereich der Hohlkammer ausgebildet, der von dem zum Einlass beabstandeten Ende einen Abstand aufweist, der zwischen 1/3 und 2/3 und bevorzugt zwischen 0,4 und 0,6 des Abstandes zwischen Einlass und beabstandeten Ende beträgt. Vorzugsweise kann der Abstand auch in einem Bereich von 0,45 bis 0,55 des Abstandes von dem zum Einlass beabstandeten Ende bis zum Einlass betragen. Insbesondere bevorzugt ist die Ausbildung des Durchlasses in einem Abstand von dem zum Einlass beabstandeten Ende der im Wesentlichen des 0,5-fache des Abstandes zwischen Einlass und beabstandetem Ende ist. Hierdurch kann erreicht werden, dass das unter einem hohen Druck durch den Einlass eintretende Abgas zunächst einen längeren Strömungspfad in der Hohlkammer geführt wird und das von dem geschlossenen Ende reflektierte Abgas im Wesentlichen in der Mitte der Hohlkammer auf das neu eintretende Abgas trifft, um dann durch den Durchlass in den Absorberabschnitt einzutreten.

In einer bevorzugten Ausführungsform ist die Größe des Durchlasses kleiner als die Erstreckung des Absorberabschnitts in Richtung des Durchlasses, so dass der Luftstrom nach Durchtritt des Durchlasses zunächst ungehindert in den Absorberabschnitt eintreten kann.

Die Anzahl der Durchlässe kann vorzugsweise derart gewählt werden, dass zwei oder mehr Durchlässe auf im Wesentlichen gleicher Höhe der Hohlkammer zum Absorberabschnitt ausgebildet sind. Die Größe der Durchlässe ist dabei so gewählt, dass das durch den Einlass eintretende Abgas bei einer hohen Beaufschlagung mit Druck zunächst nicht durch die Durchlässe durchströmt, sondern größtenteils dort vorbei und an dem dem Einlass beabstandeten Ende reflektiert wird und dann erst durch den Durchlass bzw. durch die Durchlässe in den Absorberabschnitt eintritt. Es kann auch vorgesehen sein, dass der Durchlass voll umfänglich um die Hohlkammer ausgebildet ist.

Sind mehrere Durchlässe vorgesehen, so müssen diese nicht zwingend auf gleicher Höhe der Hohlkammer ausgebildet sein. Es sind auch Ausführungsformen möglich, bei denen die Durchlässe in einem Bereich der Hohlkammer verteilt angeordnet sind. Bei allen Ausführungsformen sind die Durchlässe in einem Bereich der Hohlkammer ausgebildet, der von dem zum Einlass beabstandeten Ende einen Abstand aufweist, der zwischen 1/3 und 2/3 und bevorzugt zwischen 0,4 und 0,6 des Abstandes zwischen Einlass und beabstandeten Ende beträgt. Vorzugsweise kann der Abstand auch in einem Bereich von 0,45 bis 0,55 des Abstandes von dem zum Einlass beabstandeten Ende bis zum Einlass betragen.

Der Absorberabschnitt erstreckt sich quer zum Durchlass, so dass das Abgas hinter dem Durchlass um 90° umgelenkt wird und zumindest teilweise längs zur Hohlkammer geführt wird, wodurch der Effekt der Schallabsorption durch Mehrfachreflexion verstärkt wird. Zudem kann sich eine kompakte Vorrichtung zum Dämpfen eines Schalls eines Abgases ergeben, wenn der Absorberabschnitt zumindest teilweise längs zur Hohlkammer geführt wird. Es können sich Luftströme ergeben, die einen zumindest parallelen Anteil zur Längsachse der Hohlkammer aufweisen.

In einer bevorzugten Ausführungsform weist der Absorberabschnitt Ausgänge in zwei unterschiedlichen Richtungen auf. Der Absorberabschnitt kann derart ausgestaltet sein, dass das Abgas nach dem Durchtritt durch den Durchlass in zwei im Wesentlichen einen 180°-Winkel zueinander ausbildenden Teilströmen geführt wird. Hierdurch kann ein Auslass der Vorrichtung im Bereich des Einlasses für die Hohlkammer und ein weiterer Auslass im Bereich des zum Einlass beabstandeten Endes der Hohlkammer vorliegen. Das durch den Durchlass tretende Abgas kann auf zwei Pfade abgeführt werden, die im Wesentlichen den gleichen Strömungswiderstand haben können. Der Absorberabschnitt kann sich vom Durchlass in zwei entgegengesetzte Richtungen erstrecken. Die sich an dem Absorberabschnitt anschließenden Auslässe können gleichen Querschnitt haben. Ein Auslass an einem Ende kann insbesondere ringförmig um die Kohlkammer ausgebildet sein.

In einer bevorzugten Ausführungsform ist die Hohlkammer in ihrer Längserstreckung modular verlängerbar, so dass je nach auftretendem Maximaldruck - der sich aufgrund der Vorgabe des Sorptionstrockners ergibt - beim Druckschlag eine an diesen Druckschlag angepasste Länge der Hohlkammer verwendbar ist. Es können im Wesentlichen gleichartige Vorrichtungen miteinander verbunden werden, so dass die Hohlkammern miteinander derart verbunden sind, dass eine die Hohlkammern verlängernde weitere Hohlkammer an dem dem Einlass beabstandeten geschlossenen Ende angesetzt wird. Das in die Vorrichtung einströmende Abgas durchströmt bei einem Druckschlag zunächst die Hohlkammer und wird an dem nunmehr geschlossenen Ende der angefügten Hohlkammer reflektiert und trifft auf durch den Einlass strömendes Abgas und gelangt dann über den Durchlass der ersten Vorrichtung in den Absorberabschnitt. Das Abgas durchströmt dann den Absorberabschnitt und tritt dann in die Umgebung.

Die Hohlkammer kann an dem zum Einlass beabstandeten geschlossenen Ende beispielsweise ein Außengewinde aufweisen, auf das eine Kappe zum Abschluss der Hohlkammer ausschraubbar ist, aufweist. Nach Entfernen der Kappe kann eine weitere Vorrichtung zum Dämpfen des Schalls mit der ersten Vorrichtung verbunden werden. Beispielsweise können die beiden Vorrichtungen miteinander indirekt oder direkt beispielsweise über ein Außengewinde der ersten Vorrichtung verschraubt sein, in dem eine ein Innengewinde aufweisende Hülse auf die erste und zweite Vorrichtung geschraubt wird und damit eine geschlossene Verbindung zur Ausbildung eines geschlossenen Strömungspfades möglich ist. Die Vorrichtungen können auch ineinander gesteckt werden. Das beschriebene Außengewinde kann auch als Innengewinde, in das eine Kappe mit einem Außengewinde eingeschraubt wird, ausgestaltet sein. Es ist auch eine Steck- und/oder Steck-Dreh-Verbindungen, beispielsweise in Form eines Bajonettverschlusses, möglich.

Für eine Verbesserung der Handhabung kann die Vorrichtung am zum Einlass beabstandeten Ende der Hohlkammer ein selbsttätig öffnendes Ventil aufweisen, das beim Verbinden des zum Einlass beabstandeten Endes der Hohlkammer mit einer weiteren Vorrichtung bzw. einem Hohlkammermodul, selbsttätig geöffnet wird. Das Ventil kann auch als Magnetventil ausgebildet sein.

Die Erfindung schafft auch ein System umfassend eine vorgenannte Vorrichtung, bei der zwei Vorrichtungen miteinander endseitig verbindbar sind. Die Verbindung kann mittels einer Schraub-, Steck- und/oder Steck-Dreh-Verbindung realisiert sein.

Die Erfindung schafft ferner einen Sorptionstrockner mit einer zuvor geschriebenen Vorrichtung, bei dem die Vorrichtung in einem Strömungspfad einem Behälter mit Sorbens nachgeschaltet ist, bevor die durch den Behälter geführte Strömung in die Umgebung tritt.

Im Sinne der Erfindung wird unter einem "Sorptionstrockner" eine Vorrichtung zur Trocknung eines Fluids verstanden, bei der zusätzlich eine Filterung des Fluids vorgesehen sein kann. Ein mit Druck beaufschlagtes Fluid kann demnach in vorbestimmter Qualität bzw. Ausmaß von Feuchtigkeit und gegebenenfalls von Partikeln befreit werden. Ein Sorptionstrockner im Sinne der Erfindung kann einen Einlass und einen Auslass für das Fluid aufweisen, wobei zwischen dem Einlass und dem Auslass ein oder mehrere vom Fluid durchströmbare Trockenmittel und/oder Filtermittel angeordnet sein können. In dem Sorptionstrockner kann nach dem Einlass in Strömungsrichtung des Fluids ein Vorfilter vorgesehen sein, in dem das Fluid von Partikeln und Kondensat befreit werden kann. Das anfallende Kondensat kann über einen Kondensatableiter aus dem Vorfilter abgeführt werden.

Dem Vorfilter nachfolgend kann das Fluid durch ein Trockenmittel geführt werden, das in einer oder mehreren Kartuschen als Granulat angeordnet ist, welches ein Molekularsieb sein kann. Die Kartuschen befinden sich in einem Behälter des Sorptionstrockners. Mindestens eine Kartusche kann in dem Behälter angeordnet werden. Es können auch mehrere direkt oder indirekt (mittels entsprechender Verbindungsstücke) miteinander verbundene Kartuschen in dem Behälter angeordnet werden. Der Behälter kann Teil der Rohrleitung des Sorptionstrockners sein. In einer bevorzugten Ausführungsform kann auf das Innere des Behälters mittels Öffnen eines stirnseitig angeordneten Deckels und/oder Bodens zugegriffen werden. Der Behälter kann geöffnet werden und die Kartuschen eingesetzt bzw. entnommen werden. Oberhalb und unterhalb des Behälters sind im Deckel und/oder Boden Anschlusselemente vorgesehen, die mit der Kartusche, in der das Trockenmittel aufgenommen ist, verbunden werden können. Über die Verbindung eines der sorptionstrocknerseitigen Anschlusselemente und der Vorrichtung wird eine gasdichte Verbindung erreicht, die notwendig ist, um die gewünschte Entfeuchtung zu erzielen. Die gasdichte Verbindung muss auch mit jeder weiteren Vorrichtung, die möglicherweise in den Behälter eingesetzt wird, beispielweise im Falle gestapelter Kartuschen, ausgebildet werden.

In dem in der Kartusche aufgenommenen Trockenmittel kann das Fluid bis zu einem erforderlichen Trockenheitsgrad (Drucktaupunkt) getrocknet werden. Dem Trockenmittel in Strömungsrichtung nachfolgend kann ein Nachfilter vorgesehen sein, in welchem eventuell anfallende Partikel aus dem Trockenmittel zurückgehalten werden. Dem Nachfilter kann der Auslass der Vorrichtung folgen und das saubere und trockene Fluid kann in ein Fluidversorgungsnetz und zur Anwendung gelangen. Es ist möglich, dass Teilströme in der Vorrichtung gebildet werden. Es können zwei Strömungspfade vorhanden sein, wobei sich in einem Strömungspfad ein Trockenmittel in einem Trocknungstakt (Adsorptionsphase) befinden kann, und in einem anderen Strömungspfad ein Trockenmittel selbst getrocknet werden kann (Regenerationsphase). Es kann auch vorgesehen sein, dass ein Teilstrom bereits getrockneten Fluids über eine Blende auf atmosphärischen Druck entspannt wird, zur Regeneration über das Trockenmittel geführt und über ein insbesondere als Magnetventil ausgestaltetes Ventil und gegebenenfalls einen Schalldämpfer an die Umgebung abgeführt wird.

Der Begriff "Kartusche" umfasst eine geschlossene Einheit, in der das Trockenmittel aufgenommen ist. Vorzugsweise herrscht zwischen dem Trockenmittel und der Kartusche ein derartiger Druck, dass das Trockenmittel in der Kartusche unbeweglich ist. Dazu ist das Trockenmittel vorzugsweise so in die Kartusche eingefüllt und in dieser fixiert, dass es auch unter dem Einfluss höherer Gasgeschwindigkeiten unbeweglich ist.

Ferner schafft die Erfindung ein Verfahren zum Dämpfen eines Schalls eines aus einem Sorptionstrockner austretenden Abgases unter Verwendung der erfindungsgemässen Vorrichtung.

Die erfindungsgemäße Vorrichtung zum Dämpfen eines Schalls eines Abgases und das erfindungsgemäße System werden insbesondere bevorzugt zum Dämpfen des Schalls von Druckluft oder Stickstoff und anderen Druckfluiden, insbesondere solchen, die als Energieträger, beispielsweise zum Betrieb von Druckluftbremsen bei Schienenfahrzeugen oder zum Antrieb von Maschinen unter Tage im Bergbau, zur Signalübertragung (ähnlich dem elektrischen Strom), zur Reinigung, als Atemgas, zur Kühlung eingesetzt werden, verwendet. Insbesondere bevorzugt wird die erfindungsgemäße Vorrichtung zum Dämpfen eines Schalls eines Abgases und das erfindungsgemäße System bei Systemen eingesetzt, bei denen ein in einem Druckraum aufgebauter Fluiddruck schlagartig durch Öffnen eines Ventils geändert wird. Insbesondere bevorzugt wird die erfindungsgemäße Vorrichtung zum Dämpfen eines Schalls eines Abgases nicht zum Dämpfen des Schalls eines Abgases eines Verbrennungsmotors eingesetzt.

Der in den Patentansprüchen oder in der Beschreibung verwendete Begriff "mindestens ein" ebenso wie der in den Patentansprüchen oder in der Beschreibung verwendete unbestimmte Artikel "ein" - auch in entsprechenden grammatikalischen Ausprägungen in Bezug auf Genus und Deklination - umfasst im Hinblick auf das in Bezug genommene nachfolgende Nomen genau eines oder mehrere, d.h. zwei, drei, vier usw., der durch das Nomen bezeichneten Elemente.

Die Erfindung wird nachfolgend anhand von in den Zeichnungen dargestellten Ausführungsbeispielen näher erläutert.

In den Zeichnungen zeigt:
- Fig. 1: eine schematische Darstellung eines Sorptionstrockners mit Vorrichtungen zum Dämpfen eines Schalls eines Abgases;
- Fig. 2: eine Vorrichtung zum Dämpfen eines Schalls eines Abgases in einer Schnittdarstellung;
- Fig. 3: zwei miteinander verbundene Vorrichtungen zum Dämpfen eines Schalls eines Abgases in einer Schnittdarstellung;
- Fig. 4: eine perspektivische Ansicht einer ersten Ausführungsform einer Hohlkammer für die erfindungsgemäße Vorrichtung;
- Fig. 5: eine perspektivische Ansicht einer zweiten nicht erfindungsgemässen Ausführungsform einer Hohlkammer und
- Fig. 6: eine perspektivische Ansicht einer dritten Ausführungsform einer Hohlkammer für die erfindungsgemäße Vorrichtung.

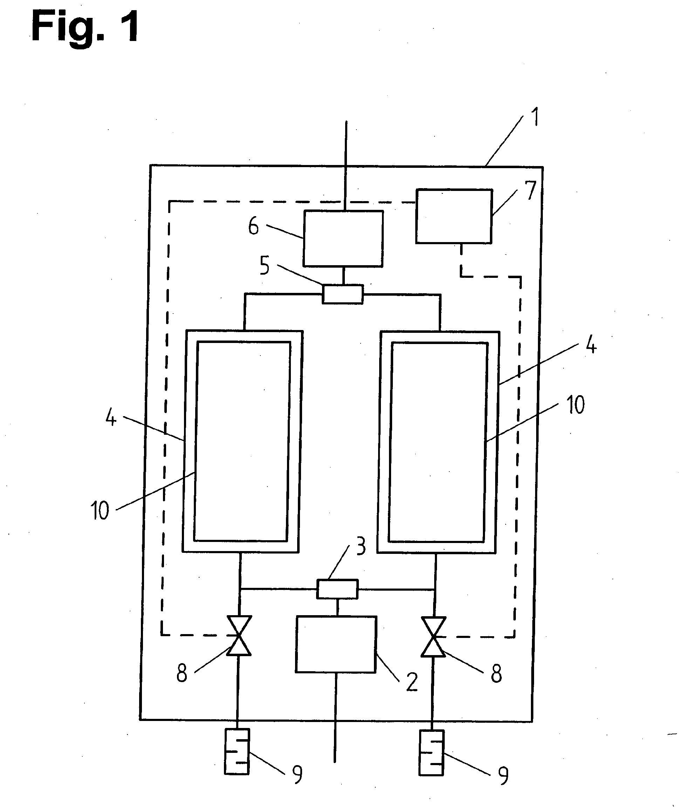

Figur 1 zeigt ein Ausführungsbeispiel eines Sorptionstrockners für ein Fluid. Die Vorrichtung weist ein Gehäuse 1 auf, in dem ein Strömungspfad für das mit Druck beaufschlagte Fluid ausgebildet ist. Einem Einlass folgend ist ein für das Entziehen von Partikeln und Kondensat aus dem Fluid vorgesehener Vorfilter 2 angeordnet. Stromabwärts ist ein dem Vorfilter 2 nachfolgendes Wechselventil 3 vorgesehen. Dem Wechselventil 3 folgen stromabwärts jeweils in zwei zueinander parallelen Strömungspfaden in den Rohrleitungen Behälter 4. In den Behälter 4 ist jeweils eine als Kartusche ausgebildete Vorrichtung 10 zur Aufnahme eines Trockenmittels einsetzbar. Ferner folgt dem Wechselventil 3 ein Magnetventil 8, mit dem eine Verbindung über eine Vorrichtung 9 zum Dämpfen eines Schalls mit der Umgebung herstellbar ist.

Dem Behälter 4 folgt ein Wechselventil 5. Dem Wechselventil 5 folgt stromabwärts ein Nachfilter 6, in dem Abrieb aus dem Trockenmittel zurückgehalten werden kann. Dem Nachfilter 6 folgt der Auslass des Sorptionstrockners, von dem das mit Druck beaufschlagte Fluid trocken und rein in ein Fluidversorgungsnetz zur Anwendung gelangen kann.

Der Sorptionstrockner weist gemäß dem in Figur 1 dargestellten Ausführungsbeispiel eine Kontrolleinheit 7 auf, die Signaleingänge und Signalausgänge aufweist. Die Kontrolleinheit 7 steuert die Magnetventile 8. Ferner kann das Signal eines in Strömungsrichtung zwischen Wechselventil 5 und Nachfilter 6 angeordneten Sensors, der zur Ermittlung der Feuchte des Fluids ausgestaltet ist, erfasst werden. Die Kontrolleinheit 7 kann Zustände des Sorptionstrockners erfassen, beobachten und/oder steuern.

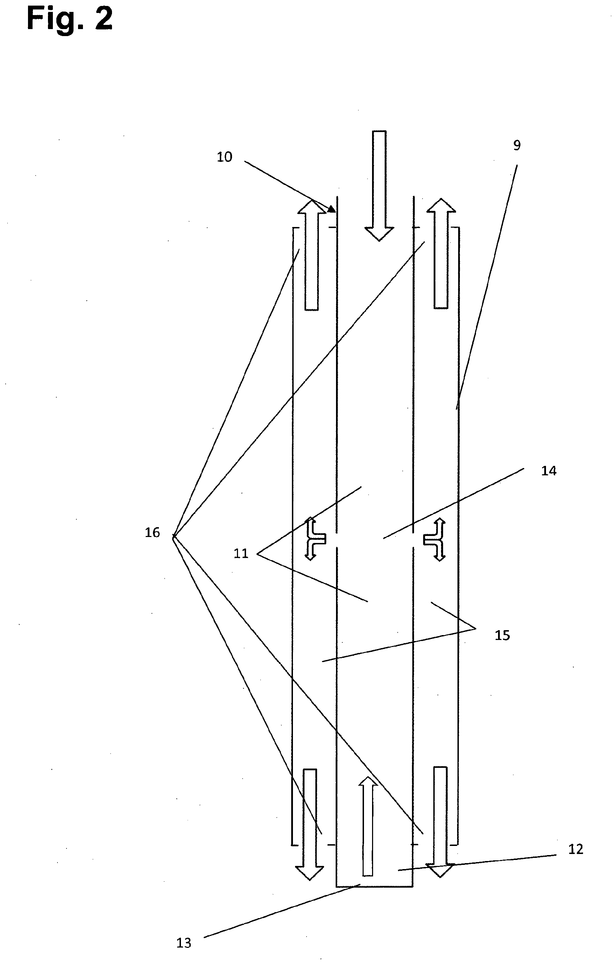

Figur 2 zeigt schematisch eine Ausführungsform einer Vorrichtung 9 zum Dämpfen eines Schalls eines Abgases.

Das Abgas kann über einen Einlass 10 in die Vorrichtung 9 eintreten und gelangt in eine Hohlkammer 11, die im Wesentlichen keine Füllung aufweist. Unter hohem Druck stehendes Abgas wird an der dem Einlass 10 beabstandeten Ende 12 der Vorrichtung 9 am geschlossenen Ende 13 der Hohlkammer 11 reflektiert und auf das nachströmende durch den Einlass 10 einströmende Abgas umgelenkt. Hierdurch bildet sich ein Reflektionsschalldämpfungsabschnitt aus. Das Abgas, welches nunmehr abgebremst ist, tritt durch einen Durchlass 14, der ringförmig ausgestaltet ist in einen Absorberabschnitt 15, der mit einem offenporigen Melaminharzschaum gefüllt ist. Der Durchlass 14 ist ringförmig um die Hohlkammer 11 ausgebildet. Der Durchlass 14 weist im Wesentlichen einen Abstand zum geschlossenen Ende 13 der Hohlkammer 11 auf, der ungefähr dem 0,5-fachen des Abstands zwischen dem Einlass 10 und dem geschlossenen Ende 13 entspricht.

Nach dem Eintritt des Abgases in den Absorberabschnitt 15 wird das Abgas um 90° umgelenkt und mittels des offenporigen Melaminharzschaumes wird die Schallenergie des Abgases in Wärme umgewandelt.

Der Absorberabschnitt 15 umgibt die Hohlkammer 11 vollumfänglich, wobei der Absorberabschnitt 15 kürzer als die Länge des Hohlraums 11 ist. Endseitig steht die Hohlkammer 11 gegenüber dem Absorberabschnitt 15 über; die Hohlkammer 11 ist länger als der Absorberabschnitt 15. Der Absorberabschnitt 15 weist jeweils an dem benachbarten Ende der Hohlkammer in der Nähe des Einlasses 10 und der Nähe des geschlossenen Endes 13 der Hohlkammer 11 einen Auslass 16 auf, der ringförmig um die Hohlkammer ausgebildet ist.

Abgas, welches mit einem niedrigeren Druck beaufschlagt ist, kann in die Ausführungsform einer Vorrichtung 9 zum Dämpfen eines Schalls eines Abgases gemäß Figur 2 über den Einlass 10 in die Vorrichtung 9 eintreten. Das Abgas, das nur gering mit Druck beaufschlagt ist, kann über den Durchlass 14 in den Absorberabschnitt 15 strömen.

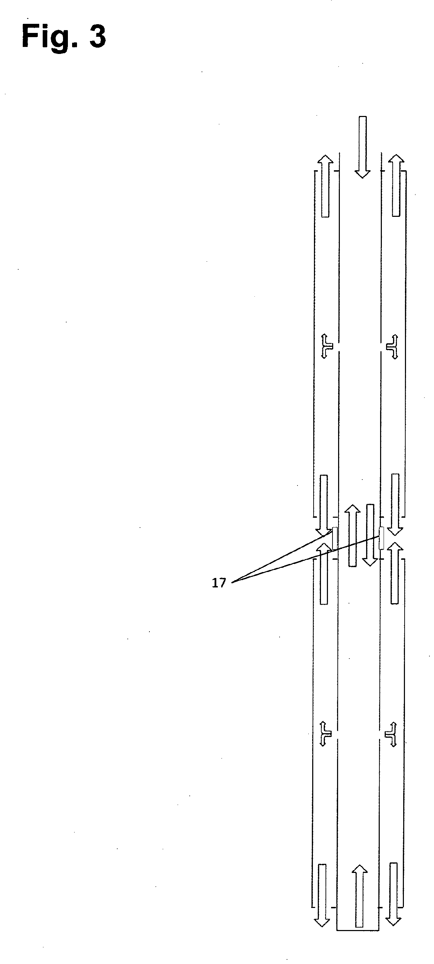

Figur 3 zeigt in einer Schnittdarstellung in schematischer Weise zwei Vorrichtungen 9, die endseitig miteinander verbunden sind, um eine Hohlkammer größerer Länge auszubilden. Mittels der gegenüber dem Absorberabschnitt 15 überstehenden Ende der Hohlkammer 11, an der Befestigungsmittel ausgestaltet sein können, sind die Vorrichtungen 9 miteinander verbindbar. Die Figur 3 zeigt zwei miteinander verbundene Vorrichtungen 9, wobei auch eine größere Anzahl von miteinander verbindbaren Vorrichtungen 9, beispielsweise indem an die in der Figur 3 dargestellte rechte Vorrichtung 9 eine weitere Vorrichtung 9 endseitig angesetzt wird, ausgebildet werden kann. Als Befestigungs- bzw. Verbindungsmittel ist eine Hülse 17 mit einem Innengewinde dargestellt, in die die endseitigen Wandungen der Hohlkammer 11 der beiden Vorrichtungen 9 mit entsprechenden Außengewinden verschraubt sind. Das zuvor geschlossene Ende 13 der in Figur 2 dargestellten Vorrichtung 9 ist mit einem Einlass 10 einer weiteren Vorrichtung 9 verbunden und die beiden Vorrichtungen 9 stehen mittels ihrer Hohlkammern 11 in fluidischer Verbindung. Das geschlossene Ende 13 der zweiten Vorrichtung 9 stellt nunmehr das geschlossene Ende der beiden Hohlkammern 11 der Vorrichtung 9 dar. Bei einem Eintritt von Abgas über den Einlass 10 der linksseitigen Vorrichtung 9, das unter hohem Druck befindlich ist, durchströmt das Abgas zunächst die Hohlkammern 11 und wird am geschlossenen Ende 13 reflektiert. Das vormals unter hohem Druck befindliche Abgas tritt durch den Durchlass 14 der linken der beiden Vorrichtungen 9 in Figur 3 aus der Hohlkammer 11 in den Absorberabschnitt 15 ein und durchströmt diesen.

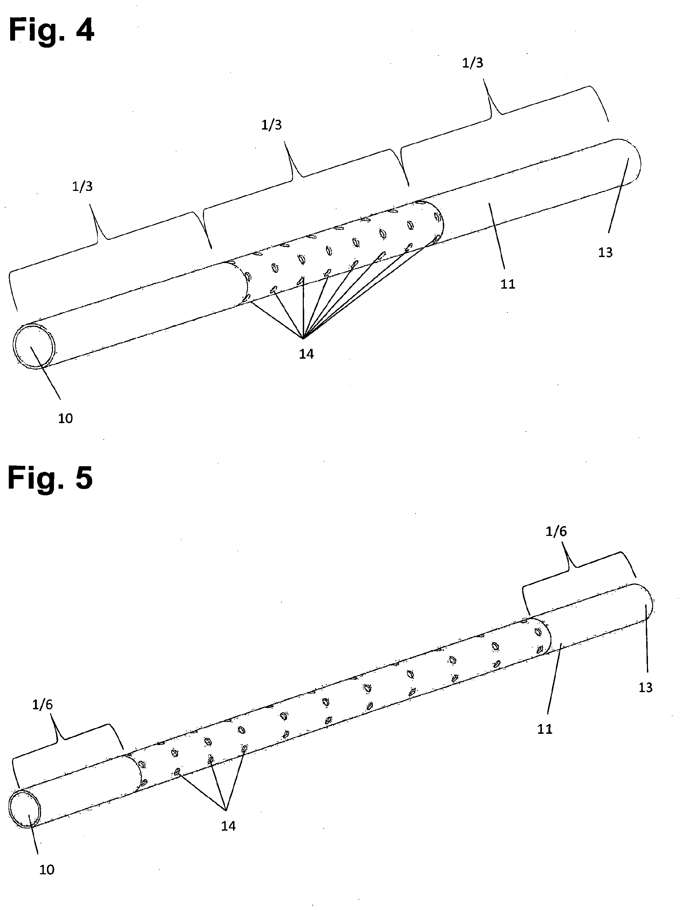

Unter niedrigem Druck in die beiden Vorrichtungen 9 der Figur 3 stehendes Abgas tritt durch die Durchlässe 14 der beiden Vorrichtungen 9 ohne eine wesentliche Reflektion am geschlossenen Ende 13 der Hohlkammer 11 ein und durchströmt den Absorberabschnitt 15. Fig. 4 zeigt in einer perspektivischen Ansicht eine erste Bauform einer Hohlkammer 11, wie sie für die erfindungsgemäße Vorrichtung eingesetzt werden kann. Die Hohlkammer 11 weist einen (bzgl. seiner Anschlussgeometrie nicht näher ausgeführten) Einlass 10 auf. Ferner weist die Hohlkammer 11 ein geschlossenes Ende 13 auf. In einem Bereich der Hohlkammer, der von dem zum Einlass 10 beabstandeten Ende 13 einen Abstand aufweist, der zwischen 1/3 und 2/3 des Abstandes zwischen Einlass 10 und beabstandeten Ende 13 beträgt, ist eine Vielzahl von Durchlässen 14 in Form kreisförmiger Öffnungen vorgesehen.

Fig. 5 zeigt eine zu der in Fig. 4 dargestellten Bauform vergleichbare Bauform einer Hohlkammer 11, die jedoch nicht erfindungsgemäss ist. Bei der Hohlkammer der Fig. 5 ist in einem Bereich der Hohlkammer, der von dem zum Einlass 10 beabstandeten Ende 13 einen Abstand aufweist, der zwischen 1/6 und 5/6 des Abstandes zwischen Einlass 10 und beabstandeten Ende 13 beträgt, eine Vielzahl von Durchlässen 14 in Form kreisförmiger Öffnungen vorgesehen.

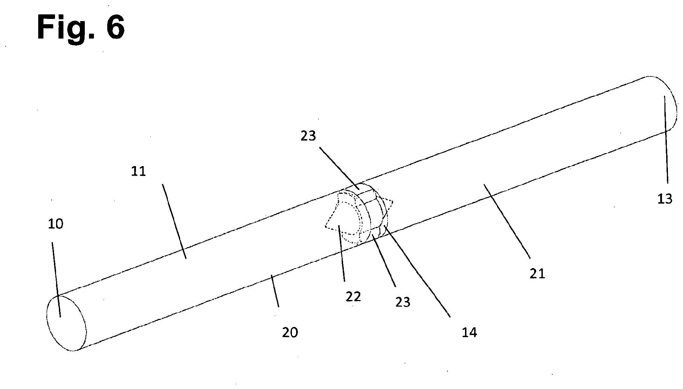

Während die Hohlkammern 11 der Fig. 4 und 5 jeweils auf einem Rohr aufbauen, in dessen Umfangsfläche die Durchlässe 14 als Löcher eingebracht werden, zeigt die Fig. 6 eine Ausführungsform einer Bauform einer Hohlkammer 11, die auf zwei Rohren 20, 21 aufgebaut ist.

Die Rohre 20, 21 sind in Flucht zueinander angeordnet. An dem einen Ende des ersten Rohres 20 sind die für den Einlass 10 notwendigen (in der Fig. 6 nicht näher dargestellten) Elemente ausgeführt. An dem dem Einlass am meisten beabstandeten Ende 13 wird das zweite Rohr 21 geschlossen ausgebildet, beispielsweise durch ein dort (in der Fig. 6 nicht näher dargestelltes) vorgesehenes Verschlusselement oder beispielsweise durch ein Ventil. Das erste Rohr 20 und das zweite Rohr 21 werden an ihren verbleibenden Enden über ein Verbindungsstück 22 verbunden. Das die beiden Rohre 20, 21 verbindende Verbindungsstück 22 weist Vorsprünge 23 auf, die zwischen einander zugewandte ringförmige Endoberflächen der Rohre 20, 21 ragen. Dadurch wird ein zunächst zwischen den einander zugewandten ringförmigen Endoberflächen der Rohre 20, 21 gebildeter umlaufender Spalt in Kreissegmente unterteilt. Der jeweilige Durchlass 14 wird dann durch die gegenüberliegenden Ränder zweier benachbarter Vorsprünge 23 und die zwischen den benachbarten Vorsprüngen 23 liegenden Segmentabschnitte der ringförmigen Endoberflächen der Rohre 20 und 21 begrenzt. Über den Umfang des Hohlkörpers sind eine der Anzahl der Vorsprünge 23 der Verbindungsstücks 22 entsprechende Anzahl von Durchlässen 14 vorgesehen.

## Patentansprüche

1. Vorrichtung zum Dämpfen eines Schalls eines Abgases, umfassend eine einen Einlass für das Abgas aufweisende Hohlkammer und einen Absorberabschnitt, wobei die Hohlkammer (11) am zum Einlass (10) beabstandeten Ende (13) geschlossen ausgebildet ist und die Hohlkammer (11) zwischen dem geschlossenen Ende (13) und dem Einlass (10) einen Durchlass (14) zum Absorberabschnitt (15) aufweist, wobei sich der Absorberabschnitt (15) quer zum Durchlass (14) derart erstreckt, dass das Abgas hinter dem Durchlass (14) um 90° umgelenkt wird und zumindest teilweise längs zur Hohlkammer (11) geführt wird, **dadurch gekennzeichnet, dass** der Durchlass (14) in einem Bereich der Hohlkammer (11) ausgebildet ist, der von dem zum Einlass (10) beabstandeten Ende (13) einen Abstand aufweist, der zwischen 1/3 und 2/3 des Abstandes zwischen Einlass (10) und beabstandetem Ende (13) beträgt und falls die Hohlkammer (11) zwischen dem geschlossenen Ende (13) und dem Einlass (10) mehrere Durchlässe (14) zum Absorberabschnitt (15) aufweist, alle Durchlässe (14) in einem Bereich der Hohlkammer (11) ausgebildet sind, die von dem zum Einlass (10) beabstandeten Ende (13) einen Abstand aufweisen, der zwischen 1/3 und 2/3 des Abstandes zwischen Einlass (10) und beabstandetem Ende (13) beträgt.

2. Vorrichtung nach Anspruch 1, wobei der Durchlass (14) eine geringere Querschnittsfläche als die Hohlkammer (11) aufweist.

3. Vorrichtung nach Anspruch 1 oder 2, **dadurch gekennzeichnet, dass** der Absorberabschnitt die Hohlkammer (11) zumindest teilweise umgibt.

4. Vorrichtung nach einem der Ansprüche 1 bis 3, **dadurch gekennzeichnet, dass** der Absorberabschnitt (15) ein poröses Material, insbesondere einen offenporigen Melaminharzschaum aufweist.

5. Vorrichtung nach einem der Ansprüche 1 bis 4, **dadurch gekennzeichnet, dass** die Größe des Durchlasses (14) kleiner als die Tiefe des Absorberabschnitts (15) ist.

6. Vorrichtung nach Anspruch 5, **dadurch gekennzeichnet, dass** zwei Durchlässe (14) auf im Wesentlichen gleicher Höhe der Hohlkammer (11) zum Absorberabschnitt (15) ausgebildet sind.

7. Vorrichtung nach einem der Ansprüche 1 bis 6, **dadurch gekennzeichnet, dass** Auslässe (16) vorgesehen sind, die in zwei unterschiedliche Richtungen weisen.

8. Vorrichtung nach einem der Ansprüche 1 bis 7, **dadurch gekennzeichnet, dass** die Hohlkammer (11) in ihrer Längserstreckung modular verlängerbar ist.

9. Vorrichtung nach Anspruch 8, **dadurch gekennzeichnet, dass** das zum Einlass (10) beabstandete Ende (13) der Hohlkammer (11) ein selbsttätig öffnendes Ventil aufweist, das beim Verbinden des zum Einlass (10) beabstandeten Endes (13) der Hohlkammer mit einer weiteren Hohlkammer selbsttätig öffnet.

10. System umfassend eine Vorrichtung nach einem der Ansprüche 1 bis 9, wobei zwei Vorrichtungen (9) miteinander endseitig verbindbar sind.

11. Sorptionstrockner mit einer Vorrichtung nach einem der Ansprüche 1 bis 9, wobei die Vorrichtung (9) in einem Strömungspfad einem Behälter mit Sorbens nachgeschaltet ist.

12. Verfahren zum Dämpfen eines Schalls eines aus einem Sorptionstrockner austretenden Abgases umfassend den Schritt eines Führens des Abgases durch eine Hohlkammer einer Vorrichtung nach einem der Ansprüche 1 bis 9, **gekennzeichnet durch** Reflektieren von mit hohem Druck beaufschlagtem Abgas an einem endseitigen Ende (13) der Hohlkammer (11), wodurch das mit hohem Druck beaufschlagte Abgas auf nachströmendes Abgas umgelenkt wird; Führen von Abgas aus der Hohlkammer (11) in einen Absorberabschnitt (15) der Vorrichtung nach einem der Ansprüche 1 bis 9.

## Claims

1. Device for attenuating an exhaust-gas noise comprising a hollow chamber which has an inlet for the exhaust gas and an absorber section, wherein the hollow chamber (11) is designed to be closed at the end (13) spaced apart from the inlet (10) and the hollow chamber (11) has a passage (14) to the absorber section (15) between the closed end (13) and the inlet (10), wherein the absorber section (15) extends transversely to the passage (14) in such a manner that the exhaust gas is deflected behind the passage (14) by 90° and is conducted at least partially along the hollow chamber (11), **characterized in that** the passage (14) is configured in a region of the hollow chamber (11) which is at a distance from the end (13) spaced apart from the inlet (10), which distance is between 1/3 and 2/3 of the distance between the inlet (10) and the spaced-apart end (13), and if the hollow chamber (11) has multiple passages (14) to the absorber section (15) between the closed end (13) and the inlet (10), all passages (14) are configured in a region of the hollow chamber (11), which are at a distance from the end (13) spaced apart from the inlet (10), which distance is between 1/3 and 2/3 of the distance between the inlet (10) and the spaced-apart end (13).

2. Device according to Claim 1, wherein the passage (14) has a smaller cross-sectional area than the hollow chamber (11).

3. Device according to Claim 1 or 2, **characterized in that** the absorber section surrounds the hollow chamber (11) at least partially.

4. Device according to one of Claims 1 to 3, **characterized in that** the absorber section (15) comprises a porous material, in particular an open-pore melamine resin foam.

5. Device according to one of Claims 1 to 4, **characterized in that** the size of the passage (14) is smaller than the depth of the absorber section (15).

6. Device according to Claim 5, **characterized in that** two passages (14) are configured at substantially the same height of the hollow chamber (11) to the absorber section (15).

7. Device according to one of Claims 1 to 6, **characterized in that** outlets (16) are provided which point in two different directions.

8. Device according to one of Claims 1 to 7, **characterized in that** the hollow chamber (11) can be extended in modular fashion in its longitudinal extent.

9. Device according to Claim 8, **characterized in that** the end (13) of the hollow chamber (11) which is spaced apart from the inlet (10) has an automatically opening valve which opens automatically when the end (13) of the hollow chamber which is spaced apart from the inlet (10) is connected to a further hollow chamber.

10. System comprising a device according to one of Claims 1 to 9, wherein two devices (9) can be connected to one another at the end.

11. Sorption dryer having a device according to one of Claims 1 to 9, wherein the device (9) is connected downstream of a container with sorbent in a flow path.

12. Method for attenuating a noise of an exhaust gas emerging from a sorption dryer, comprising the step of guiding the exhaust gas through a hollow chamber of a device according to one of Claims 1 to 9, **characterized by** reflection of exhaust gas which is subjected to high pressure at an end-side end (13) of the hollow chamber (11), as a result of which the exhaust gas subjected to high pressure is diverted to a following exhaust gas flow; guidance of exhaust gas from the hollow chamber (11) into an absorber section (15) of the device according to one of Claims 1 to 9.

## Revendications

1. Dispositif pour amortir un bruit d'un gaz d'échappement, comprenant une chambre creuse présentant une entrée pour le gaz d'échappement et une section d'absorption, la chambre creuse (11) étant fermée à l'extrémité (13) à distance de l'entrée (10) et la chambre creuse (11) présentant, entre l'extrémité fermée (13) et l'entrée (10), un passage (14) vers la section d'absorption (15), la section d'absorption (15) s'étendant transversalement au passage (14) de telle sorte que le gaz d'échappement est dévié de 90° en aval du passage (14) et est guidé au moins partiellement le long de la chambre creuse (11), **caractérisé en ce que,** le passage (14) est disposé dans une zone de la chambre creuse (11) qui présente une distance par rapport à l'extrémité (13) à distance de l'entrée (10) qui est comprise entre 1/3 et 2/3 de la distance entre l'entrée (10) et l'extrémité à distance (13), et si la chambre creuse (11) présente plusieurs passages (14) vers la section d'absorption (15) entre l'extrémité fermée (13) et l'entrée (10), tous les passages (14) sont disposés dans une zone de la chambre creuse (11) qui présente une distance par rapport à l'extrémité (13) à distance de l'entrée (10) qui est comprise entre 1/3 et 2/3 de la distance entre l'entrée (10) et l'extrémité à distance (13).

2. Dispositif selon la revendication 1, dans lequel le passage (14) a une section transversale plus petite que celle de la chambre creuse (11).

3. Dispositif selon la revendication 1 ou 2, **caractérisé en ce que,** la section d'absorption entoure au moins partiellement la chambre creuse (11).

4. Dispositif selon l'une des revendications 1 à 3, **caractérisé en ce que,** la section d'absorption (15) comprend un matériau poreux, en particulier une mousse de résine de mélamine à pores ouverts.

5. Dispositif selon l'une des revendications 1 à 4, **caractérisé en ce que,** la dimension du passage (14) est inférieure à la profondeur de la section d'absorption (15).

6. Dispositif selon la revendication 5, **caractérisé en ce que,** deux passages (14) sont disposés sensiblement à la même hauteur de la chambre creuse (11) vers la section d'absorption (15).

7. Dispositif selon l'une des revendications 1 à 6, **caractérisé en ce que,** des sorties (16) sont prévues, qui vont dans deux directions différentes.

8. Dispositif selon l'une des revendications 1 à 7, **caractérisé en ce que,** la chambre creuse (11) est extensible de façon modulaire dans le sens de sa longueur.

9. Dispositif selon la revendication 8, **caractérisé en ce que,** l'extrémité (13) de la chambre creuse (11) à distance de l'entrée (10) comprend une soupape à ouverture automatique qui s'ouvre automatiquement lorsque l'extrémité (13) de la chambre creuse à distance de l'entrée (10) est reliée à une autre chambre creuse.

10. Système comprenant un dispositif selon l'une quelconque des revendications 1 à 9, dans lequel deux dispositifs (9) sont connectables l'un à l'autre par l'extrémité.

11. Dessicateur à sorption avec un dispositif selon l'une des revendications 1 à 9, le dispositif (9) étant connecté dans un chemin d'écoulement en aval d'un conteneur avec sorbant.

12. Procédé d'atténuation du son d'un gaz d'échappement sortant d'un dessicateur à sorption comprenant l'étape d'un guidage du gaz d'échappement à travers une chambre creuse d'un dispositif selon l'une des revendications 1 à 9, **caractérisé par** la réflexion du gaz d'échappement à haute pression à une extrémité terminale (13) de la chambre creuse (11), redirigeant ainsi le gaz d'échappement à haute pression vers le gaz d'échappement en aval ; le guidage du gaz d'échappement de la chambre creuse (11) dans une section d'absorption (15) du dispositif selon l'une des revendications 1 à 9.
